# EUROPÄISCHE PATENTSCHRIFT

(11) **EP 1 395 959 B1**
(45) Veröffentlichungstag und Bekanntmachung des Hinweises auf die Patenterteilung: **23.06.2010**
(21) Anmeldenummer: 02745073.3
(22) Anmeldetag: 23.05.2002
(51) Int. Cl.: G07C 9/00

(54) **VERFAHREN UND VORRICHTUNG ZUR ERKENNUNG NATÜRLICHER HAUT**
METHOD AND DEVICE FOR RECOGNITION OF NATURAL SKIN
PROCEDE ET DISPOSITIF D'IDENTIFICATION DE LA PEAU NATURELLE

(30) Priorität: 13.06.2001 DE 10128717
(43) Veröffentlichungstag der Anmeldung: 10.03.2004
(73) Patentinhaber: TST Biometrics Holding AG, 8044 Zürich (CH)
(72) Erfinder: GILENKO, Mark, 89075 Ulm (DE); EINIGHAMMER, Hans, verstorben (DE)
(74) Vertreter: Hentrich, Swen
(86) Internationale Anmeldenummer: PCT/DE2002/001861
(87) Internationale Veröffentlichungsnummer: WO 2002/101668

(56) Entgegenhaltungen:
- EP-A- 0 359 554
- WO-A-01/34027
- US-A- 5 419 321
- US-A- 5 598 843

## Beschreibung

Die Erfindung betrifft ein Verfahren zur Erkennung natürlicher Haut bei der berührungslosen biometrischen Identifizierung eines Menschen sowie eine Vorrichtung zur Durchführung des Verfahrens.

Bei der Berechtigungskontrolle hinsichtlich des Zuganges zu geschlossenen Systemen, wie diese beispielsweise durch Raumkomplexe oder Datennetze gegeben sein können, werden in verstärktem Umfang biometrische Kontrollen zur Identifizierung des Zugangsberechtigten durchgeführt, da bei den individuellen biometrischen Eigenschaften eines Individuums im Gegensatz zur Verwendung von Paßwörtern oder Schlüsseln keine Gefahr besteht, daß diese verlorengehen oder weitergegeben werden können. In der Praxis hat es sich bewährt, die Papillarlinienmuster an den Handinnenflächen oder den Fingerkuppen als biometrisches, bei jedem Individuum unterschiedliches und unveränderliches Merkmal zu benutzern, wobei Verfahren bekannt sind, mit denen diese Papillarlinienmuster berührungslos optisch erfaßt werden. Bei diesen Messungen wird das Papillarlinienmuster als solches ausgewertet, also die Topologie der Hautoberfläche, oder anders formuliert, das Muster des durch die Papillarleisten gebildeten Reliefs. Dabei besteht das Problem, daß bei Kenntnis des Papillarlinienmusters die Meßapparatur zur Erfassung der biometrischen Daten im Prinzip getäuscht werden kann mittels Falschvorlagen, die eine Nachbildung des Papillarlinienmusters entsprechend der dreidimensionalen Originalvorlage aufweisen und die beispielsweise denkbar sind in Form von zweidimensionalen Nachbildungen, dreidimensionalen Nachbildungen oder Überzügen auf natürlichen Fingern.

Die WO 01/34 027 A1 offenbart ein nicht der biometrischen Identifizierung, sondern der Diagnostizierung von Hauterkrankungen dienendes Verfahren mit dazugehörender Vorrichtung, bei dem zur Untersuchung von Hautläsionen die Haut mittels eines Beleuchtungsrings beleuchtet wird, um Abbildungen der Hautläsion aufzunehmen, zu digitalisieren und auszuwerten, die durch Streulicht erzeugt werden.

Die EP 0 359 554 A2 beschreibt ein Verfahren zur Personenidentifizierung, bei dem optisch Abdrücke von Fingern erfaßt werden, die in Kontakt mit einer Glasplatte gebracht werden, also keine berührungslose Arbeitsweise vorliegt und die Glasplatte aufgrund der zwingend erforderlichen Zugänglichkeit Manipulations- und Beschädigungsversuchen ausgesetzt ist. Neben den Fingerabdrücken wird zur Vorbeugung gegen Fälschungen zugleich auch ausgewertet, ob durch Streuung ein Versatz zwischen Einstrahlungsstelle und der Stelle vorliegt, von der das Licht in die Meßapparatur eintritt.

In der US 5 598 843 wird eine Vorrichtung beschrieben, mit der durch direkten Kontakt zur Haut mittels eines ersten Emitters Licht eingestrahlt wird, das durch einen zweiten Emitter detektiert wird, der durch eine undurchsichtige Wand vom ersten Emitter getrennt ist.

Auch die US 5 419 321 zeigt einen nicht-invasiven, aber kontaktbehafteten Sensor zur optischen quantitativen Bestimmung einer Substanz in lebenden Gewebe.

Der Erfindung liegt die Aufgabe zugrunde, ein Verfahren anzugeben, mit dem die Sicherheit biometrischer Verfahren mit Auswertung von Papillarlinienmustern zur Kontrolle der Zugangsberechtigung, gegen Täuschungsversuche verbessert werden kann. Aufgabe der Erfindung ist weiterhin, eine Vorrichtung bereitzustellen, mit der dieses Verfahren ausgeführt werden kann.

Diese Aufgabe wird bezüglich den das Verfahren betreffenden Teil nach der Erfindung gelöst durch ein Verfahren zur Erkennung natürlicher Haut bei der berührungslosen biometrischen Identifizierung eines Menschen, bei dem die Hautoberfläche mit Licht aus dem sichtbaren oder angrenzenden Bereich an einer einem Finger oder der Handinnenfläche zugeordneten Einstrahlungsstelle beleuchtet wird, wobei mehrere begrenzte Spektralbereiche zur Beleuchtung der Einstrahlungsstelle verwendet werden, bei dem der Teil des an der Einstrahlungsstelle durch die Hautoberfläche eintretenden, in der Haut gestreuten und aus der Hautoberfläche wieder austretenden Lichtes als Streulicht an einer Detektionsstelle, mit einem Detektor detektiert wird und zugleich optisch berührungslos mit einem Papillarliniensensor die charakteristischen Linienmuster erfaßt werden, und bei dem das von dem Detektor erfaßte Signal einem Komparator zugeführt und mit hinterlegten Daten, verglichen wird.

Dieses Verfahren bietet den Vorteil, daß optische Eigenschaften der natürlichen Haut durch Messung des Streulichts überprüft werden, wodurch eine Vielzahl von Betrugsmöglichkeiten der eingangs genannten Art ausgeschlossen werden können. Dazu wird die Haut an der Einstrahlungsstelle mit einem Lichtstrahl beleuchet, der zu einem Teil an der Oberfläche diffus reflektiert wird. Der verbleibende Teil des Lichtstrahls dringt in das Gewebe der Haut ein und wird in diesem Volumen durch Vielfachstreuung verteilt, wobei ein Bruchteil dieses Streulichts wieder aus der Hautoberfläche austritt und so die Haut hell erscheinen läßt. Da natürliche Haut aus komplexen organischen Strukturen aufgebaut ist und eine Vielzahl von optisch wirksamen Substanzen enthält, sind ihre optischen Eigenschaften, insbesondere hinsichtlich der Streuung (Mie- und Rayleighstreuung) und der mit Streulicht bestimmbaren Absorption nicht oder nur mit sehr hohem Aufwand zu imitieren.

Ganz besonders vorteilhaft ist, daß das Streulicht an mehreren räumlich unterschiedlichen Detektionsstellen detektiert wird, die einen unterschiedlichen Abstand zur Einstrahlungsstelle aufweisen. Da die Intensität des Streulichts mit wachsender Entfernung von der Einstrahlungsstelle nach einer bestimmten Funktion, hier "Streufunktion" genannt, abfällt, die neben der Abhängigkeit von der Entfernung auch eine Abhängigkeit von der Wellenlänge des eingestrahlten Lichtes aufweist, besteht bei diesem Verfahren die Möglichkeit der strengen Kontrolle, ob die beleuchtete Probe hinsichtlich ihrer Streufunktion mit der natürlichen Haut übereinstimmt, wobei nach derzeitigen Erkenntnisstand es unmöglich ist, diese Streufunktion künstlich präzise nachzubilden und das zur Annäherung an diese Streufunktion verwendete Material zusätzlich noch mit der zur weiteren Nachbildung des Papillarlinienmusters notwendigen Oberflächenprofilierung zu versehen. Der weitere große Vorteil ist der weitergehende Schutz gegen Täuschungsversuche, da die beiden Messungen zur Erfassung des Papillarlinienmusters und des Streuverhaltens natürlicher Haut praktisch an derselben Stelle und nahezu zeitgleich erfolgen und somit kleine Möglichkeiten bestehen, zwischen den beiden Messungen die Meßprobe zu verschieben oder auszutauschen.

Die Sicherheit des erfindungsgemäßen Verfahrens ist dadurch gesteigert, daß zur Beleuchtung der Einstrahlungsstelle Licht aus mehreren begrenzten Spektralbereich verwendet wird, da diese auf die optischen Eigenschaften hinsichtlich Streuung und Absorption der in der Haut vorhandenen Stoffe abgestimmt werden können, also insbesondere zur Beleuchtung der Einstrahlungsstelle Licht aus Spektralbereichen verwendet wird, in denen Absorption und Streuung eines natürlich in der Haut vorkommenden Naturstoffes charakteristische Werte annehmen.

Günstig ist dabei, wenn Licht aus den Spektralbereichen um 600 nm und um 800 nm zur Beleuchtung der Einstrahlungsstelle verwendet wird, da zwischen diesen Wellenlängen sowohl ein großer Absorptionssprung des Hämoglobins als auch ein Absorptionsabfall des Hautfarbstoffes Melanins erfaßt werden kann und außerdem bei den beiden Wellenlängen die schwankende Sauerstoffsättigung des Blutes keinen Einfluß auf die Messung hat. Ein weiterer vorteilhafter begrenzter Spektralbereich zur Beleuchtung der Haut an der Einstrahlungsstelle liegt bei etwa 1250 nm, wobei bei dieser Wellenlängen im wesentlichen der Wassergehalt des Gewebes das Meßergebnis bestimmt.

Wenn die Intensität des Lichtes zeitlich moduliert wird, so daß Wechsellicht zur Anwendung kommt, ist das Verfahren unempfindlich gegen Umgebungs-Störlicht, das durch einfache herkömmliche Maßnahmen wie z.B. Abschirmung häufig nicht völlig eliminiert werden kann.

Gleichfalls ist die Möglichkeit gegeben, daß das Streulicht von der Detektionsstelle über einen Lichtleiter dem Detektor zugeführt wird.

Der die Vorrichtung betreffende Teil der Aufgabe wird nach der Erfindung dadurch gelöst, daß eine Beleuchtungsanordnung zur Beleuchtung der Hautoberfläche mit licht aus mehreren begrenzten Spektralbereichen an der Einstrahlungsstelle, Detektoren zur Detektion des an anderer stelle liegenden Detektionsstellen emittierten Streulichtes, ein Papillarliniensensor mit einer Kamera zur optisch berührungslosen Erfassung der charakteristischen Linienmuster der Haut und eine als Komparator fungierende Datenverarbeitungseinheit insbesondere ein Mikroprozessor, vorgesehen sind. Vorgesehen ist weiterhin, daß die Lichtquelle auf der Haut ein einem angenäherten oder vollständigen Kreisring entsprechendes Beleuchtungsmuster erzeugt. Diese Gestaltung dient der Verbesserung der Meßsicherheit durch Mittelwertbildung über Gewebsinhomogenitäten und der Erzeugung genügend starker Meßsignale durch Überlagerung einer größeren Anzahl gleichartiger Einzelstreulichtverteilungen.

Das dem Kreisring entsprechende Beleuchtungsmuster wird in einfacher und daher bevorzugter Weise dadurch erzeugt, daß der Lichtquelle ein Beleuchtungsring zugeordnet ist. Bei dem dem Kreisring entsprechenden Beleuchtungsmuster hat es sich im Hinblick auf die höhere Intensität des Streulichts in einer vorgegebenen Entfernung von der Eintrittstelle, nämlich dem Radius R, als günstig erwiesen, wenn die Detektionsstelle dem Zentrum des Kreisringes zugeordnet ist, da so die Symmetrie der Beleuchtung zur Erzielung eines starken Meßsignales für den dem Radius R entsprechenden Abstand ausgenutzt wird.

Zur Erfassung der Streufunktion ist es günstig, wenn mehrere Lichtquellen in dem Beleuchtungsring angeordnet sind, die Licht unterschiedlicher Wellenlänge emittieren. Dabei ist es günstig, wenn die Anzahl der Lichtquellen einer Wellenlänge mit dem Streu- und Absorptionsvermögen (Streufunktion) der Haut bei dieser Wellenlänge korreliert ist, so daß Licht einer Wellenlänge, deren Streufunktion zu einer stärkeren Abschwächung der Intensität im gegebenen Abstand führt, mit einer höheren, über den Beleuchtungsring gemittelten Einstrahlintensität an der Einstrahlungsstelle eingestrahlt wird, um so ein ausreichendes, hinsichtlich der Intensität mit den Meßsignalen anderer Wellenlängen vergleichbares Meßsignal zu erhalten.

Alternativ besteht auch die Möglichkeit, daß der Durchmesser des ringförmigen Beleuchtungsmusters auf die von der Lichtquelle emittierte Wellenlänge und dem damit korrelierten Streu- und Absorptionsvermögen (Streufunktion) der Haut abgestimmt ist, daß also zur Erzielung einer gut meßbaren Intensität des Streulichtes nicht die Intensität des eingestrahlten Lichtes variiert wird, sondern der Abstand der Einstrahlungsstelle von der Detektionsstelle.

Dies läßt sich in besonders einfacher und daher bevorzugter Weise dadurch erreichen, daß mindestens zwei konzentrisch zueinander angeordnete Beleuchtungsringe vorgesehen sind, die Licht unterschiedlicher Wellenlängen emittieren.

Im Rahmen der Erfindung sind Leuchtdioden als Lichtquellen vorgesehen, die einen durch ein Vieleck angenäherten Kreisring darstellen und ein durch getrennte Lichtflecke angenähertes ringförmiges Beleuchtungsmuster erzeugen. Die Einschränkung der Kreisannäherung wird dadurch überwunden, daß der Beleuchtungsring durch ein totalreflektierendes Rohrstück aus einem optischen Werkstoff gebildet ist. Auf dessen einen Seite kann das Licht eingekoppelt werden, das das Rohrstück durchläuft und dabei zwischen den Wandungen des Rohrstücks mehrfach reflektiert wird, sich so gleichmäßig über dem Umfang verteilt und so zu einem gleichmäßig ausgeleuchteten Kreisring mit entsprechendem Beleuchtungsmuster führt. Dabei kann die Oberfläche auf der Austrittsseite des Rohrstückes angerauht sein. Möglich ist weiterhin, daß Laser als Lichtquellen verwendet werden. Vorgesehen ist weiterhin eine Linse zur Abbildung der Lichtquelle auf die Haut. Um die Empfindlichkeit der Meßapparatur gegenüber einer Defokussierung zu mindern bzw in einem gewissen Tiefenschärfebereich fehlerfrei Meßwerte zu erhalten, ist einer zentralen Bohrung der Linse der Detektor zugeordnet, also eine koaxiale Meßanordnung gewählt.

Eine kompakte Bauform der Vorrichtung wird erreicht, indem ein Spiegel im Strahlengang zwischen den Lichtquellen und der der Abbildung des Beleuchtungsmusters auf die Haut dienenden Linse angeordnet ist, der den Strahlengang so umlenkt, daß die Linse benachbart zum oder im Inneren des Rohrstücks angeordnet ist.

Die Erzeugung eines Beleuchtungsmusters ist auch mittels einer herkömmlichen Projektoranordnung, bestehend aus der Lichtquelle, Kondensor, Projektionsmustervorlage und Objektiv, möglich, mit dem die Einstrahlungsstelle ausgeleuchtet wird. Weiterhin sind Laser-Musterprojektoren, wie z.B. Laserdioden-Kreisprojektoren vorteilhaft.

Günstig ist es gleichfalls, wenn ein Lichtleiter zur Zuführung des Streulicht zum Detektor vorgesehen ist, insbesondere wenn der Lichtleiter flexibel ausgeführt ist und so zu dem an beliebiger Stelle, auch außerhalb des Strahlengangs plazierten Detektor geführt werden kann.

Wenn bei anspruchsvollen technischen Lösungen für Anwendungsfälle mit hohen Sicherheitsanforderungen mit relativ vielen diskreten Wellenlängen gemessen werden muß, wird der technische Aufwand sehr groß, dies mit einer entsprechend hohen Anzahl von Lichtquellen und Beleuchtungsringen zu realisieren. Erfindungsgemäß ist dann im Strahlengang vor dem Detektor ein Spektrometer, beispielsweise ein Gitterspektrometer einfacher und damit kostengünstiger Bauart angeordnet, das die wellenlängenabhängige Auswertung der Streulichtintensität ermöglicht. Vorteilhaft ist dann, wenn der Detektor durch ein Photodioden-Array (PDA) oder ein Charged-Coupled-Device (CCD) gebildet ist. Vorgesehen ist weiterhin ein Helligkeitssensor zur Überwachung der Helligkeit der Lichtquelle, z.B. eine Monitor-Meßdiode, woraus sich auch die Möglichkeit einer Konstantregelung ergibt.

Es ist von Vorteil, daß die Einstrahlungsstelle einem Finger oder der Handinnenfläche eines Menschen zugeordnet ist und zugleich optisch berührungslos mit einem Papillarliniensensor die charakteristischen Linienmuster erfaßt werden, da so die Integration der Kontrolle der Zugangsberechtigung mit der Kontrolle hinsichtlich der Täuschungsversuche in einer Vorrichtung erfolgt. Insbesondere ergeben sich Vorteile, weil die beiden berührungslos durchzuführenden Messungen hinsichtlich der Lebenderkennung und der biometrischen Identifizierung quasi zeitgleich erfolgen bei enger räumlicher Kopplung der Meßgebiete.

Übereinstimmende räumliche Meßgebiete sind erreichbar, wenn ein Strahlteiler zur Einblendung des von der Lichtquelle erzeugten und des zu messenden Streulichtes in den objektseitigen Strahlengang des Papillarliniensensors vorgesehen ist.

Möglich und bevorzugt ist es gleichfalls, wenn der Detektor durch die Kamera des Papillarliniensensors gebildet ist, wobei die Kamera zur Aufnahme des von der Detektionsstelle abgestrahlten Streulichts vorgesehen ist. Bei Benetzung der Kamera als Papillarliniensensor ist es auch vorteilhaft, wenn zusätzlich zum Meßfleckbild auch das Beleuchtungsmuster auf der Haut mit aufgenommen und im Bild gemessen wird. In diesem Fall tritt die mit Volumenstreuung überlagerte Streuung an der Oberfläche der Einstrahlungsstelle als Referenzgröße auf und eine Stabilisierung oder Kontrolle der Lichtquelle ist nicht unbedingt erforderlich.

Günstig bei Benutzung der Kamera des Papillarliniensensors ist es weiterhin, wenn im Beleuchtungsstrahlengang des Streulichtsensors und vor der Kamera jeweils in gekreuzter Stellung ein Polarisationsfilter angeordnet ist, da so bei der Erfassung der Papillarlinienmuster Glanzeffekte vermieden werden können. Es bietet sich an und ist vorteilhaft, als Papillarliniensensor den in DE 198 18 229 A1 beschriebenen Sensor zu benutzen, da hierbei ohnehin ein Polarisationsfilter vor der Kamera vorgesehen ist und eine photometrische Auswertung des Meßfleckbildes möglich ist.

Eine einfache und raumsparende Beleuchtungsanordnung kann realisiert werden, daß der Linse eine zentrale kreisförmige Abblendung zugeordnet ist, und wenn mehrere Lichtquellen in unterschiedlichen Abständen auf der optischen Achse angeordnet sind. Hierbei wird ausgenutzt, daß eine gewisse Unschärfe des Beleuchtungsmusters auf der Haut nicht störend ist, so daß durch diesen Aufbau in einfacher Weise ein Mehrzahl von Ringbildern erzeugt wird, wobei lediglich zu beachten ist, daß die Abblendung gegenüber der Meßkamera bzw dem Detektor genügend groß ist.

Im folgenden wird die Erfindung an in der Zeichnung dargestellten Ausführungsbeispielen näher erläutert; es zeigen:
- Fig. 1: eine schematische Darstellung der Vorgänge beim Beleuchten von Haut,
- Fig. 2: eine grafische Darstellung der Intensität des Streulichts in Abhängigkeit des Abstandes r der Detektionsstelle von der Einstrahlungsstelle, dargestellt für drei unterschiedliche Wellenlängen,
- Fig. 3: eine der Figur 2 entsprechende Darstellung der Überlagerung zweier Streufunktionen von im Abstand 2 R angeordneten Einstrahlungsstellen,
- Fig. 4: eine schematische Darstellung des Kreisringes mit der im Zentrum angeordneten Detektionsstelle,
- Fig. 5: eine schematische Darstellung des Aufbaus der erfindungsgemäßen Vorrichtung mit in unterschiedlichen Beleuchtungsringen angeordneten Lichtquellen unterschiedlicher Wellenlängen,
- Fig. 6: eine zu Fig. 5 vergleichbare Darstellung einer alternativen, totalreflektierende Rohrstücke nutzenden Ausführungsform,
- Fig. 7: eine der Fig. 5 entsprechende Darstellung einer nochmals anderen Ausführungsform mit einem Lichtleiter und einem integrierten Bauteil zur Detektion und Auswertung der Streufunktion mittels Komparator,
- Fig. 8: eine der Fig. 5 entsprechende Darstellung mit der Verwendung eines Spiegels im Beleuchtungsstrahlengang zur Verkürzung der Bauform,
- Fig. 9: einen einfachen Aufbau zur Erzeugung mehrerer Ringmuster unter Verwendung einer Abblendung, und

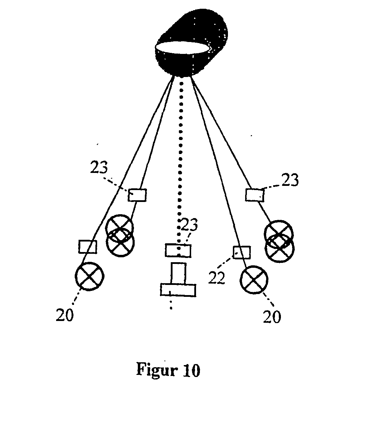

- Fig.10: eine alternative Anordnung der Lichtquellen und des Detektors zur Zusammenwirkung mit einer Vorrichtung zur Erfassung der Papillarlinien eines Fingers.

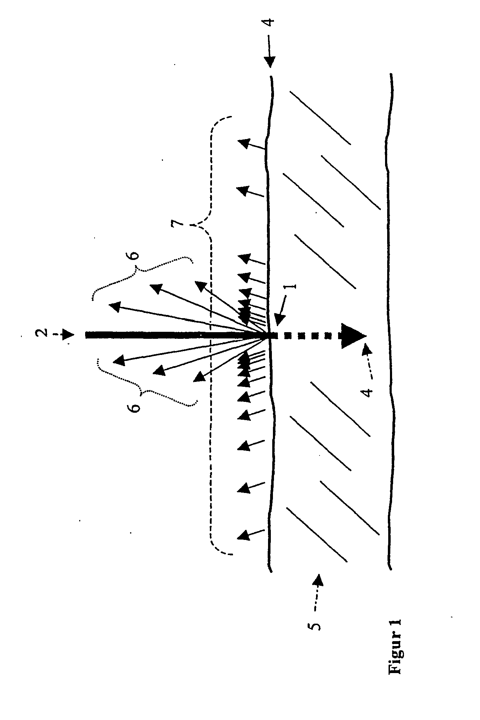

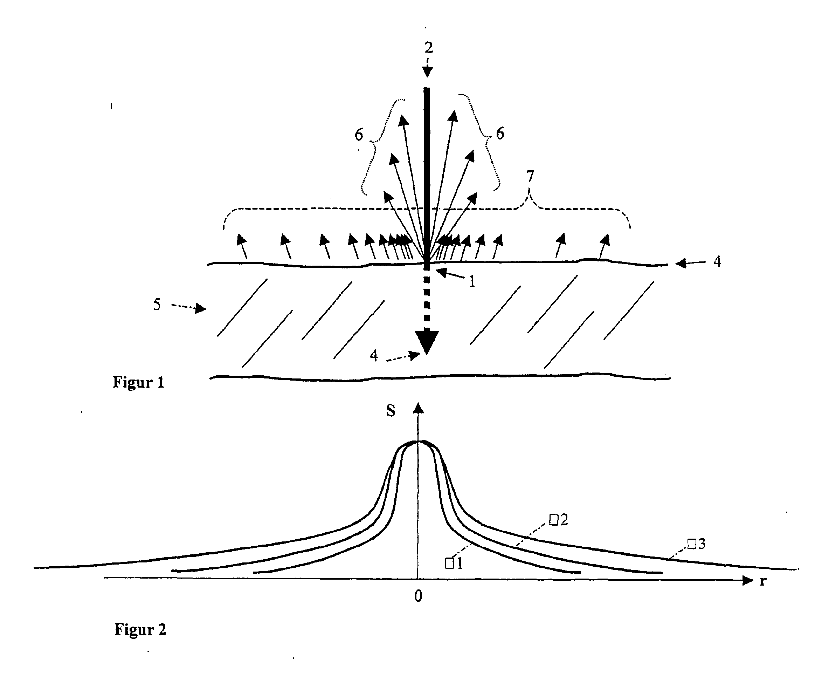

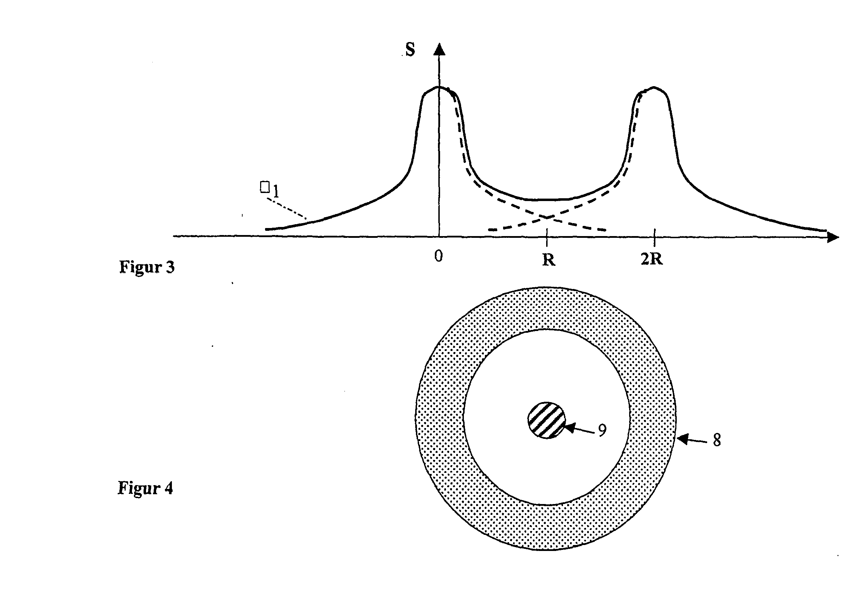

In Fig. 1 ist vereinfacht die Entstehung des Streulichts 7 dargestellt, wenn an der Einstrahlungsstelle 1 ein Lichtstrahl 2 einer bestimmten Intensität und Wellenlänge eingestrahlt wird. Ein Teil dieses Lichtstrahles 2 wird an der Oberfläche 4 der Haut 5 diffus reflektiert, wodurch das Lichtbündel 6 entsteht. Der andere Teil des Lichtstrahls 2 tritt durch die Oberfläche 4 hindurch in das Gewebe der Haut 5 ein und verteilt sich dort durch Vielfachstreuung. Ein Bruchteil dieses in der Haut 5 gestreuten Lichtes tritt aus der Hautoberfläche 4 als sichtbares Streulicht 7 wieder aus, wobei die Intensität dieses Streulichtes 7 in charakteristischer Weise gemäß der Streufunktion S von dem Abstand der Austrittsstelle von der Einstrahlungsstelle 1 sowie der Wellenlänge des eingestrahlten Lichtes abhängt. Diese zu einer Streufunktion S führende gesetzmäßige Abhängigkeit, verursacht durch die optischen Materialeigenschaften der Haut 5, ist in Fig. 2 für 3 unterschiedliche Wellenlängen schematisch dargestellt. Zur Erzielung eines ausreichend großen Signal-Rausch-Verhältnisses und zur Mittelwertbildung über Gewebsinhomogenitäten wird das Licht in einem einem Kreisring entsprechenden Beleuchtungsmuster 8 auf die Haut 5 eingestrahlt, so daß die Einstrahlungsstelle 1 die Form dieses Kreisringes hat. Die Detektionsstelle 9 ist dabei dem Zentrum dieses Kreisringes zugeordnet, wie dies in Fig. 4 dargestellt wird. Dieses Beleuchtungsmuster in Form eines Kreisringes führt zu einer Überlagerung sämtlicher Streufunktionen, die sich ergeben, wenn man die in Fig. 3 dargestellten Streufunktionen um eine durch deren halben Abstand gehenden Achse dreht, mit dem Ergebnis, daß im Zentrum eine relativ große Intensität zur Verfügung steht.

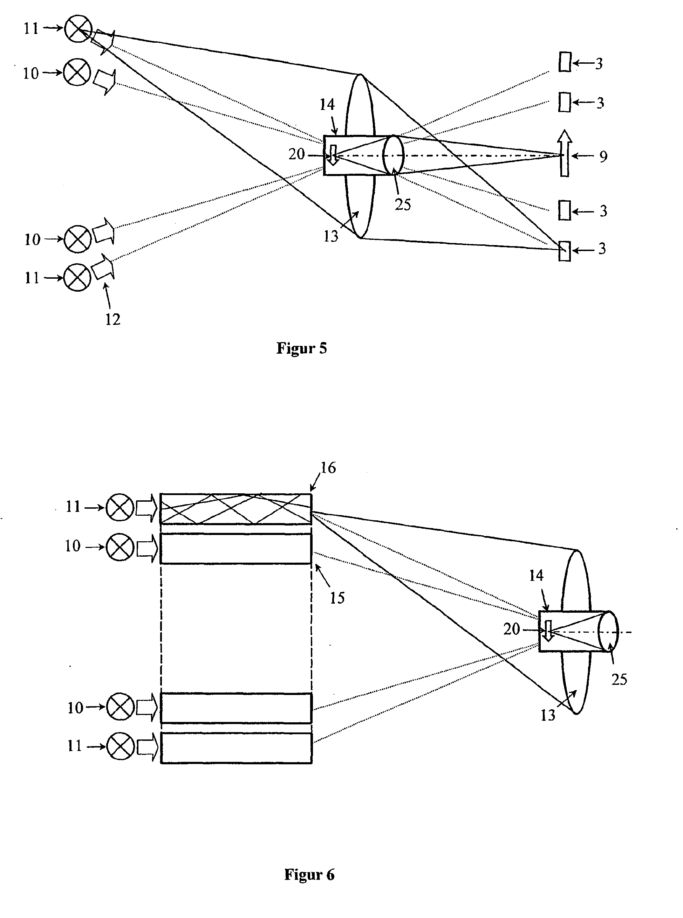

Fig. 5 zeigt den apparativen Aufbau, mit dem das Verfahren zur Erkennung natürlicher Haut 5 durchgeführt werden kann, der in dem gezeigten Ausführungsbeispiel gleichmäßig über den Umfang zweier konzentrisch zueinander angeordneter Kreise angeordnete Lichtquellen 10,11 unterschiedlicher Wellenlänge aufweist, wobei dem inneren Kreis die Lichtquellen 10 zugeordnet sind, die Licht erzeugen, dessen Streufunktion S stärker abfällt, z.B. relativ kurzwelliges sichtbares oder relativ langwelliges infrarotes Licht.

Nach einem nicht in der Zeichnung dargestellten Ausführungsbeispiel ist es alternativ möglich, die Lichtquellen 10,11 unterschiedlicher Wellenlängen auf einem einzigen Kreis anzuordnen, wobei in diesem Fall das Zahlenverhältnis der Lichtquellen 10,11 der Streufunktion S angepaßt ist, also z.B. mehr kurzwellige als langwellige Lichtquellen 10,11 für sichtbares Licht verwendet werden.

Das von den Lichtquellen 10,11 emittierte gebündelte, durch Pfeile 12 angedeutete Licht ist auf eine Linse 13 gerichtet, die die Lichtquellen 10,11 als Elemente 3 der Beleuchtungsringe auf die Haut 5 abbildet. Das an der Detektionsstelle 9 austretende Streulicht 7 wird mit einer kleinen Meßkamera 14 gemessen, die sich in einer zentralen Bohrung der Linse 13 befindet, wobei die Meßkamera 14 aus dem Objektiv 25 sowie einem Detektor 20 am Ort des Meßfleckbildes besteht.

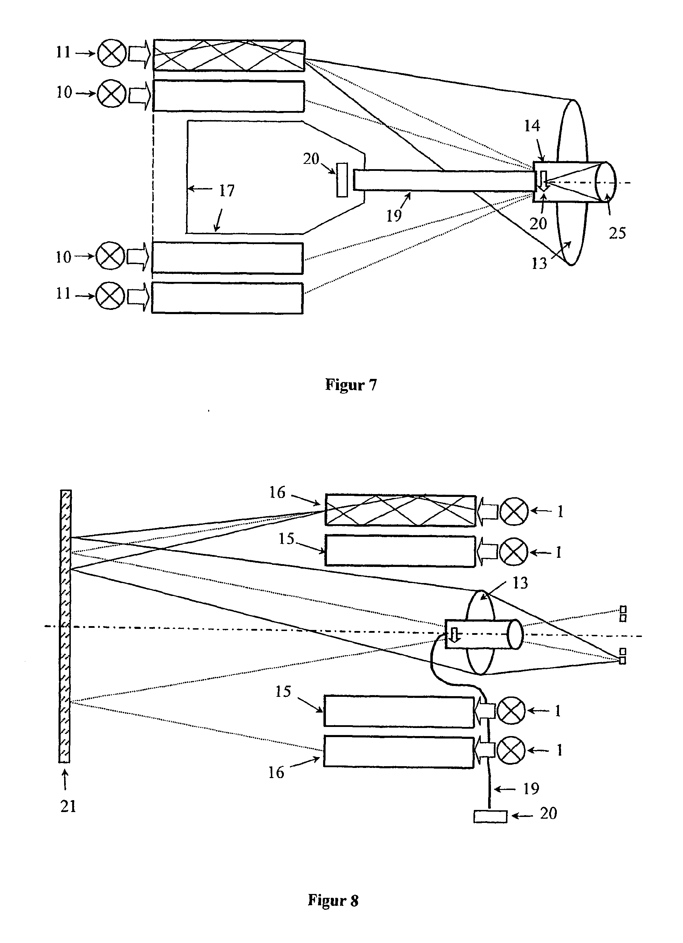

Das Ausführungsbeispiel gemäß Fig. 6 unterscheidet sich von dem aus Fig. 5 hinsichtlich der Gestaltung der Beleuchtung. Bei diesem Ausführungsbeispiel sind die Lichtquellen 10,11 auf die Eintrittsflächen zweier zusammengesteckter Rohrstücke als Beleuchtungsringe 15,16 gerichtet, in denen das Licht aufgrund der Totalreflexion zur anderen Seite, der Austrittsfläche geleitet wird. Beispielhaft bestehen die Rohrstücke aus optischem Werkstoff wie Acrylglas. Die Austrittsflächen sind leicht aufgerauht, um so zwei annähernd gleichmäßig ausgeleuchtete ringförmige Quellen zu erzeugen, die bezüglich der Meßgenauigkeit günstiger sind als durch Lücken getrennte Ringabschnitte. Fig. 7 zeigt die Möglichkeit, den Detektor 20 nicht am Ort des Meßfleckbildes vorzusehen, sondern am Ende eines Lichtleiters 19 in einem Gehäuse 17, das sich im Inneren der Rohrstücke befindet, wobei dieses Gehäuse 17 zugleich auch die weiteren erforderlichen Bauteile zur Komplettierung der Vorrichtung beinhaltet, wie beispielsweise den Komparator, die Stromversorgung und dergl.

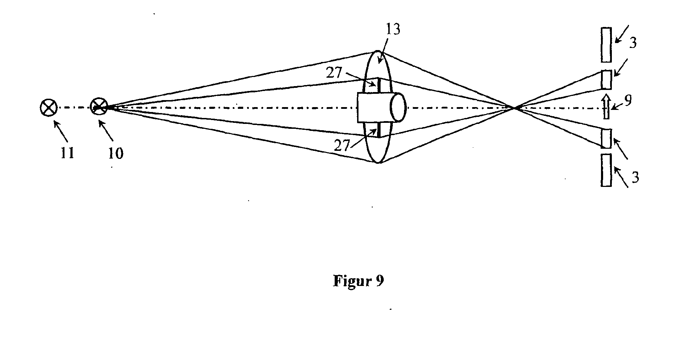

Das Gehäuse muß nicht zwingend im Inneren der Rohrstücke angeordnet sein. Fig. 8 zeigt die Verwendung eines flexiblen Lichtleiters 19, der zu dem an abweichender, prinzipiell an beliebiger Stelle plazierten Detektor 20 führt. Fig. 8 zeigt auch die Verwendung eines Spiegels 21 im Strahlengang zwischen den Lichtquellen 10,11 und der Linse 13, um so eine kompaktere Bauform der Vorrichtung zu erreichen. Nicht dargestellt ist die Anordnung eines Spektrometers im Strahlengang vor dem Detektor 20, um eine wellenabhängige Auswertung der Streulichtintensität zu ermöglichen, auch ohne spezielle Wahl der Lichtquelle 10,11, die dementsprechend breitbandig gewählt sein kann. Gleichfalls nicht gezeigt ist die Anordnung eines Strahlteilers zur Einblendung des von der Lichtquelle 10,11 erzeugten Lichts in den objektseitigen Strahlengang des Papillarliniensensors 24, wodurch die Messungen zur Lebenderkennung und Personenidentifikation an der identischen Stellung ausgeführt werden können, und zwar prinzipiell auch mit demselben Detektor 20, nämlich der Kamera 22 des Papillarliniensensors 24, der aus der DE 198 18 229 A1 bekannt ist und daher hier nicht im einzelnen beschrieben werden muß. Fig. 9 zeigt schematisch den vorbekannten Papillarliniensensor 24, mit dem optisch berührungslos insbesondere "Fingerabdrücke" erfaßt werden können. Das Papillarlinienmuster wird durch die Lichtquelle 10,11 ausgeleuchtet und mit der Kamera 22 erfaßt, wobei sowohl im Beleuchtungsstrahlengang und im Detektionsstrahlengang jeweils ein Polarisationsfilter 23 angeordnet ist. Je nach Orientierung der Polarisationsfilter 23 kann das Oberhautmuster bzw. das Unterhautmuster erfaßt werden, wobei wegen Einzelheiten wiederum auf die DE 198 18 229 A1 verwiesen wird. Bei der Streulichtmessung wird nur das Licht gemessen, das mit geänderter Polarisation gestreut wird, wozu die Einstellung der Polarisationsrichtung der Polarisationsfilter 23 ungleichsinnig gewählt wird. Das Signal der aufnehmenden Kamera 22 wird dann auch hinsichtlich der Streueigenschaften natürlicher Haut 5 ausgewertet.

Wenn man die Tatsache berücksichtigt, daß eine gewisse Unschärfe des Beleuchtungsmusters 8 auf der Haut nicht störend ist, kann die in Fig. 9 dargestellte, relativ einfache und raumsparende Beleuchtungsanordnung realisiert werden.

Die Lichtquelle 10 wird durch die Linse 13, die mit einer zentralen kreisförmigen Abblendung 27 versehen ist, wobei letztere größer als die Meßkamera 14 ist, defokussiert auf die Haut abgebildet. Wegen der wirksamen ringförmigen Pupille der Linse 13 ist das defokussierte Bild der Lichtquelle 10 ebenfalls ringförmig. Die zweite Lichtquelle 11 mit einer anderen Wellenlänge wird auf der optischen Achse vor oder hinter der ersten Lichtquelle 10 positioniert, so daß ein zweiter konzentrischer Beleuchtungsring erzeugt wird. Es können so mehrere Lichtquellen 10,11 auf der Achse angeordnet werden, die eine entsprechende Anzahl von Ringbildern erzeugen. Die Positionen der Lichtquellen 10, 11 ergeben sich aus den gewählten Ringradien.

Die Unschärfe und die Ringbreite nehmen zwar mit wachsendem Ringradius R zu. Dies ist aber weitgehend tolerierbar und kann in die geometrischen Überlegungen zum Entwurf der Anordnung miteinbezogen werden. Es ist, was den Abstand der Lichtquellen 10,11 betrifft, konstruktiv von Vorteil, wenn man positive und negative Defokussierungen miteinander kombiniert.

## Patentansprüche

1. Verfahren zur Erkennung natürlicher Haut (5) bei der biometrischen Identifizierung eines Menschen, bei dem die Hautoberfläche (4) mit Licht aus dem sichtbaren oder angrenzenden Bereich an einer einem Finger oder einer Hand zugeordneten Einstrahlungsstelle (1) beleuchtet wird, bei dem der Teil des an der Einstrahlungsstelle (1) durch die Hautoberfläche (4) eintretenden, in der Haut (5) gestreuten und aus der Hautoberfläche (4) wieder austretenden Lichtes als Streulicht (7) an einer Detektionsstelle (9) mit einem Detektor (20) detektiert wird und mit einem Papillarliniensensor die charakteristischen Linienmuster erfasst werden, und bei dem das von dem Detektor (20) erfasste Signal einer als komparator fungierenden Datenverarbeitungseinheit zugeführt und mit hinterlegten Daten verglichen wird, wobei durch die Datenverarbeitungseinheit ausgewertet wird, ob die Abhängigkeit der Intensität des Streulichtes (7) von der Wellenlänge des eingestrahlten Lichtes mit den optischen Materialeigenschaften der Haut übereinstimmt, **dadurch gekennzeichnet, dass** mit Licht aus mehreren begrenzten Spektralbereichen die Hautoberfläche beleuchtet wird und dass die Einstrahlungsstelle (1) an anderer Stelle als die Detektionsstelle (9) liegt.

2. Verfahren nach Anspruch 1 **dadurch gekennzeichnet, daß** zur Beleuchtung der Einstrahlungsstelle Licht aus einem Spektralbereich verwendet wird, in dem die Absorption und/oder Streuung eines natürlich in der Haut vorkommenden Naturstoffes charakteristische Werte annimmt.

3. Verfahren nach Anspruch 2, **dadurch gekennzeichnet, daß** das Licht aus den Spektralbereichen um 600 nm und um 800 nm zur Beleuchtung der Einstrahlungsstelle (1) verwendet wird.

4. Verfahren nach Anspruch 2 oder 3, **dadurch gekennzeichnet, daß** das Licht aus dem Spektralbereich um 1250 nm zur Beleuchtung der Einstrahlungsstelle (1) verwendet wird.

5. Verfahren nach einem der Ansprüche 1 bis 4, **dadurch gekennzeichnet, daß** das Streulicht (7) an mehreren räumlich unterschiedlichen Detektionsstellen detektiert wird.

6. Verfahren nach Anspruch 5, **dadurch gekennzeichnet, daß** die Detektionsstellen einen unterschiedlichen Abstand zur Einstrahlungsstelle aufweisen.

7. Verfahren nach einem der Ansprüche 1 bis 6, **dadurch gekennzeichnet, daß** die Intensität des Lichtes zeitlich moduliert wird.

8. Verfahren nach einem der Ansprüche 1 bis 7, **dadurch gekennzeichnet, daß** das Streulicht (7) über einen Lichtleiter (19) dem Detektor (20) zugeführt wird.

9. Verfahren nach einem der Ansprüche 6 bis 8, **dadurch gekennzeichnet, daß** kontrolliert wird, ob die beleuchtete Probe hinsichtlich ihrer Streufunktion, also der Abhängigkeit der Intensität des Streulichtes (7) von der Entfernung zu der Einstrahlungsstelle und von der Wellenlänge des eingestrahlten Lichtes mit der natürlichen Haut übereinstimmt.

10. Vorrichtung zur Durchführung des Verfahrens nach eine der Ansprüche 1 bis 9, mit einer Beleuchtungsanordnung zur Beleuchtung der Hautoberfläche, einem Detektor (20) zur Detektion des an der Detektionsstelle (9) emittierten Streulichtes (7), einem Papillarliniensensor (24) zur Erfassung der charakteristischen Linienmuster der Haut (5) und einer als komparator fungierenden Datenverarbeitungseinheit zur Auswertung der Abhängigkeit der Intensität des Streulichtes (7) von der Wellenlänge des eingestrahlten Lichtes hinsichtlich der Übereinstimmung mit den optischen Materialeigenschaften natürlicher Haut, **dadurch gekennzeichnet, dass** die Hautoberfläche mit Licht aus mehreren begrenzten Spektralbereichen unterschiedlicher Wellenlänge an der Einstrahlungsstelle (1) beleuchtet wird, die an anderer Stelle als die Detektionsstelle liegt..

11. Vorrichtung nach Anspruch 10, **dadurch gekennzeichnet, daß** die Lichtquelle (10, 11) auf der Haut (5) ein einem angenäherten oder vollständigen Kreisring entsprechendes Beleuchtungsmuster (8) erzeugt.

12. Vorrichtung nach Anspruch 10 oder 11, **dadurch gekennzeichnet, daß** der Lichtquelle (10, 11) ein Beleuchtungsring (15, 16) zugeordnet ist.

13. Vorrichtung nach Anspruch 11 oder 12, **dadurch gekennzeichnet, daß** die Detektionsstelle (9) dem Zentrum des Kreisringes zugeordnet ist.

14. Vorrichtung nach Anspruch 12 oder 13, **dadurch gekennzeichnet, daß** mehrere Lichtquellen (10,11) in dem Beleuchtungsring (15,16) angeordnet sind, die Licht unterschiedlicher Wellenlänge emittieren.

15. Vorrichtung nach Anspruch 14, **dadurch gekennzeichnet, daß** die Anzahl der Lichtquellen (10,11) einer Wellenlänge auf das Streu- und Absorptionsvermögen der Haut (5) bei dieser Wellenlänge abgestimmt ist.

16. Vorrichtung nach einem der Ansprüche 11 bis 15, **dadurch gekennzeichnet, daß** der Durchmesser des Beleuchtungsmusters (8) auf die von der Lichtquelle (10,11) emittierte Wellenlänge und dem damit korrelierten Streu- und Absorptionsvermögen der Haut (5) abgestimmt ist.

17. Vorrichtung nach Anspruch 16, **dadurch gekennzeichnet, daß** mindestens zwei konzentrisch zueinander angeordnete Beleuchtungsringe (15,16) vorgesehen sind, die Licht unterschiedlicher Wellenlängen emittieren.

18. Vorrichtung nach einem der Ansprüche 10 bis 17, **dadurch gekennzeichnet, daß** Leuchtdioden als Lichtquellen (10,11) vorgesehen sind.

19. Vorrichtung nach einem der Ansprüche 10 bis 18, **dadurch gekennzeichnet, daß** Laser als
Lichtquellen (10,11) vorgesehen sind.

20. Vorrichtung nach einem der Ansprüche 12 bis 19, **dadurch gekennzeichnet, daß** der Beleuchtungsring (15,16) durch ein totalreflektierendes Rohrstück aus einem optischen Werkstoff gebildet ist.

21. Vorrichtung nach einem der Ansprüche 10 bis 20, **dadurch gekennzeichnet, daß** eine Linse (13) zur Abbildung der Lichtquelle (10,11) auf die Haut (5) vorgesehen ist.

22. Vorrichtung nach Anspruch 21, **dadurch gekennzeichnet, daß** einer zentralen Bohrung der Linse (13) der Detektor (20) zugeordnet ist.

23. Vorrichtung nach Anspruch 21 oder 22, **dadurch gekennzeichnet, daß** ein Spiegel (21) im Strahlengang zwischen den Lichtquellen (10,11) und der der Abbildung des Beleuchtungsmusters (8) auf die Haut (5) dienenden Linse (13) angeordnet ist, der den Strahlengang so umlenkt, daß die Linse (13) benachbart. zum oder im Inneren des Rohrstücks angeordnet ist.

24. Vorrichtung nach einem der Ansprüche 10 bis 23, **dadurch gekennzeichnet, daß** das Beleuchtungsmuster (8) mittels eines Projektors an der Einstrahlungsstelle (1) erzeugt wird.

25. Vorrichtung nach einem der Ansprüche 11 bis 23, **dadurch gekennzeichnet, daß** das Beleuchtungsmuster (8) mittels eines Laser-Mustergenerators, insbesondere eines Laserdioden-Kreisprojektors erzeugt wird.

26. Vorrichtung nach einem der Ansprüche 10 bis 25, **dadurch gekennzeichnet, daß** ein Lichtleiter (19) zur Zuführung des Streulichtes (7) zum Detektor (20) vorgesehen ist.

27. Vorrichtung nach Anspruch 26, **dadurch gekennzeichnet, daß** der Lichtleiter (19) flexibel ausgeführt ist und zu dem an beliebiger Stelle angeordneten Detektor (20) führt.

28. Vorrichtung nach einem der Ansprüche 10 bis 27, **dadurch gekennzeichnet, daß** im Strahlengang vor dem Detektor (20) ein Spektrometer angeordnet ist.

29. Vorrichtung nach einem der Ansprüche 10 bis 28, **dadurch gekennzeichnet, daß** der Detektor (20) durch ein Photodioden-Array gebildet ist.

30. Vorrichtung nach einem der Ansprüche 10 bis 29, **dadurch gekennzeichnet, daß** der Detektor (20) durch einen Charged-Coupled Device gebildet ist.

31. Vorrichtung nach einem der Ansprüche 10 bis 30, **dadurch gekennzeichnet, daß** die Kamera (22) zur Aufnahme sowohl des Beleuchtungsmusters (8) als auch des von der Detektionsstelle (9) abgestrahlten Streulichts (7) vorgesehen ist.

32. Vorrichtung nach einem der Ansprüche 10 bis 31, **dadurch gekennzeichnet, daß** im Beleuchtungsstrahlengang und im Detekfionsstrahlengang jeweils ein Polarisationsfilter (23) angeordnet ist.

33. Vorrichtung nach Anspruch 10, **dadurch gekennzeichnet, daß** der Detektor (20) durch die Kamera (22) des Papillarliniensensors (24) gebildet ist.

34. Vorrichtung nach Anspruch 33, **dadurch gekennzeichnet, dass** die Kamera (22) zur Aufnahme sowohl des Beleuchtungsmusters (8) als auch des von der Detektionsstelle (9) abgestrahften Streulichts (7) vorgesehen ist.

35. Vorrichtung nach einem der Ansprüche 10 bis 34, **dadurch gekennzeichnet, daß** im Beleuchtungsstrahlengang und im Detektionsstrahlengang jeweils ein Polarisationsfilter (23) angeordnet ist.

36. Vorrichtung nach einem der Ansprüche 21 bis 35, **dadurch gekennzeichnet, daß** der Linse (13) eine zentrale kreisförmige Abblendung (27) zugeordnet ist, und daß mehrere Lichtquellen (10, 11) in unterschiedlichen Abständen auf der optischen Achse angeordnet sind.

## Claims

1. A method of recognising natural skin (5) in the biometric identification of a human being, in which the skin surface (4) is illuminated with light from the visible or the adjacent range at an irradiation location (1) associated with a finger or a hand, in which the part of the light entering through the skin surface (4) at the irradiation location (1) and scattered in the skin (5) and issuing from the skin surface (4) again is detected as scattered light (7) at a detection location (9) with a detector (20) and the characteristic line patterns are detected with a papillary line sensor, and in which the signal detected by the detector (20) is passed to a data processing unit functioning as a comparator and compared to stored data, wherein the data processing unit evaluates whether the dependency of the intensity of the scattered light (7) on the wavelength of the irradiated light is coincident with the optical material properties of the skin, **characterised in that** the skin surface is illuminated with light from a plurality of limited spectral ranges and the irradiation location (7) is at a different location from the detection location (9).

2. A method according to claim 1 **characterised in that** light from a spectral range in which the absorption and/or scattering of a natural substance naturally occurring in the skin assumes characteristic values is used for illuminating the irradiation location.

3. A method according to claim 2 **characterised in that** the light from the spectral ranges around 600 nm and around 800 nm is used for illuminating the irradiation location (1).

4. A method according to claim 2 or claim 3 **characterised in that** the light from the spectral range around 1250 nm is used for illuminating the irradiation location (1).

5. A method according to one of claims 1 to 4 **characterised in that** the scattered light (7) is detected at a plurality of spatially different detection locations.

6. A method according to claim 5 **characterised in that** the detection locations are at a different spacing relative to the irradiation location.

7. A method according to one of claims 1 to 6 **characterised in that** the intensity of the light is time-modulated.

8. A method according to one of claims 1 to 7 **characterised in that** the scattered light (7) is passed to the detector (20) by way of an optical guide (19).

9. A method according to one of claims 6 to 8 **characterised in that** a check is made to ascertain whether the illuminated sample is coincident in respect of its scatter function, that is to say the dependency of the intensity of the scattered light (7) on the distance to the irradiation location and the wavelength of the irradiated light with the natural skin.

10. A device for carrying out the method according to one of claims 1 to 9 comprising an illumination arrangement for illuminating the skin surface, a detector (20) for detecting the scattered light (7) emitted at the detection location (9), a papillary line sensor (24) for detecting the characteristic line pattern of the skin (5) and a data processing unit functioning as a comparator for evaluating the dependency of the intensity of the scattered light (7) on the wavelength of the irradiated light in respect of coincidence with the optical material properties of natural skin, **characterised in that** the skin surface is illuminated with light from a plurality of limited spectral ranges of differing wavelength at the irradiation location (1) which is at a different location from the detection location (2).

11. A device according to claim 10 **characterised in that** the light source (10, 11) produces on the skin (5) an illumination pattern (8) corresponding to an approximate or complete circular ring.

12. A device according to claim 10 or claim 11 **characterised in that** an illumination ring (15, 16) is associated with the light source (10, 11).

13. A device according to claim 11 or claim 12 **characterised in that** the detection location (9) is associated with the centre of the circular ring.

14. A device according to claim 12 or claim 13 **characterised in that** a plurality of light sources (10, 11) which emit light of differing wavelength are arranged in the illumination ring (15, 16).

15. A device according to claim 14 **characterised in that** the number of light sources (10, 11) of a wavelength is matched to the scattering and absorption capability of the skin (5) at that wavelength.

16. A device according to one of claims 11 to 15 **characterised in that** the diameter of the illumination pattern (8) is matched to the wavelength emitted by the light source (10, 11) and the scattering and absorption capability correlated therewith of the skin (5).

17. A device according to claim 16 **characterised in that** there are provided at least two mutually concentrically arranged illumination rings (15, 16) which emit light of differing wavelengths.

18. A device according to one of claims 10 to 17 **characterised in that** light emitting diodes are provided as the light sources (10, 11).

19. A device according to one of claims 10 to 18 **characterised in that** lasers are provided as the light sources (10, 11).

20. A device according to one of claims 12 to 19 **characterised in that** the illumination ring (15, 16) is formed by a totally reflecting tubular portion comprising an optical material.

21. A device according to one of claims 10 to 20 **characterised in that** there is provided a lens (13) for imaging the light source (10, 11) on to the skin (5).

22. A device according to claim 21 **characterised in that** the detector (20) is associated with a central bore of the lens (13).

23. A device according to claim 21 or claim 22 **characterised in that** a mirror (21) is arranged in the beam path between the light sources (10, 11) and the lens (13) serving for imaging of the illumination pattern (8) on to the skin (5), the mirror so deflecting the beam path that the lens (13) is arranged adjacent to or in the interior of the tubular portion.

24. A device according to one of claims 10 to 23 **characterised in that** the illumination pattern (8) is produced by means of a projector at the irradiation location (1).

25. A device according to one of claims 11 to 23 **characterised in that** the illumination pattern (8) is produced by means of a laser pattern generator, in particular a laser diode circle projector.

26. A device according to one of claims 10 to 25 **characterised in that** there is provided an optical guide (19) for feeding the scattered light (7) to the detector (20).

27. A device according to claim 26 **characterised in that** the optical guide (19) is flexible and leads to the detector (20) arranged at any desired location.

28. A device according to one of claims 10 to 27 **characterised in that** a spectrometer is arranged in the beam path upstream of the detector (20).

29. A device according to one of claims 10 to 28 **characterised in that** the detector (20) is formed by a photodiode array.

30. A device according to one of claims 10 to 29 **characterised in that** the detector (20) is formed by a charge-coupled device.

31. A device according to one of claims 10 to 30 **characterised in that** there is provided the camera (22) for recording both the illumination pattern (8) and also the scattered light (7) emitted by the detection location (9).

32. A device according to one of claims 10 to 31 **characterised in that** a respective polarisation filter (23) is arranged in the illumination beam path and in the detection beam path.

33. A device according to claim 10 **characterised in that** the detector (20) is formed by the camera (22) of the papillary line sensor (24).

34. A device according to claim 33 **characterised in that** there is provided the camera (22) for recording both the illumination pattern (8) and also the scattered light (7) emitted by the detection location (9).

35. A device according to one of claims 10 to 34 **characterised in that** a respective polarisation filter (23) is arranged in the illumination beam path and in the detection beam path.

36. A device according to one of claims 21 to 35 **characterised in that** a central circular aperture screening member (27) is associated with the lens (13) and a plurality of light sources (10, 11) are arranged at different spacings on the optical axis.

## Revendications

1. Procédé d'identification de la peau naturelle (5), lors de l'identification biométrique d'une personne, selon lequel la surface de peau (4) est éclairée avec de la lumière du domaine visible ou proche, à un point d'impact (1) associé à un doigt ou une main, selon lequel la partie de la lumière, qui entre à travers la surface de peau (4), au point d'impact (1), est diffusée dans la peau (5) et sort de nouveau de la surface de peau (4), est captée en tant que lumière diffusée (7) par un détecteur (20), à un point de détection (9), et les motifs linéaires caractéristiques sont détectés avec un capteur de lignes papillaires, et selon lequel le signal recueilli par le détecteur (20) est transmis à une unité de traitement de données, fonctionnant comme comparateur, et est comparé avec des données enregistrées, le dispositif de traitement de données évaluant si la variation de l'intensité de la lumière diffusée (7), en fonction de la longueur d'onde de la lumière incidente, correspond aux propriétés de matière optiques de la peau, **caractérisé par le fait que** la surface de peau est éclairée avec de la lumière provenant de plusieurs domaines spectraux limités, et **par le fait que** le point d'impact (1) se situe à un endroit différent du point de détection (9).

2. Procédé selon la revendication 1, **caractérisé par le fait que** pour éclairer le point d'impact, on utilise de la lumière d'un domaine spectral dans lequel l'absorption et/ou la diffusion d'une substance naturelle, naturellement présente dans la peau, adopte des valeurs caractéristiques.

3. Procédé selon la revendication 2, **caractérisé par le fait que** la lumière des domaines spectraux autour de 600 nm et autour de 800 nm est utilisée pour éclairer le point d'impact (1).

4. Procédé selon la revendication 2 ou 3, **caractérisé par le fait que** la lumière du domaine spectral autour de 1250 nm est utilisée pour éclairer le point d'impact (1).

5. Procédé selon une des revendications 1 à 4, **caractérisé par le fait que** la lumière diffusée (7) est détectée à plusieurs points de détection différents dans l'espace.

6. Procédé selon la revendication 5, **caractérisé par le fait que** les points de détection présentent des distances différentes par rapport au point d'impact.

7. Procédé selon une des revendications 1 à 6, **caractérisé par le fait que** l'intensité de la lumière est modulée dans le temps.

8. Procédé selon une des revendications 1 à 7, **caractérisé par le fait que** la lumière diffusée (7) est acheminée par un conducteur optique (19) au détecteur (20).

9. Procédé selon une des revendications 6 à 8, **caractérisé par le fait que** l'on contrôle, si l'échantillon éclairé correspond à la peau naturelle en ce qui concerne sa fonction de diffusion, c'est-à-dire la variation de l'intensité de la lumière diffusée (7) en fonction de la distance par rapport au point d'impact et de la longueur d'onde de la lumière incidente.

10. Dispositif pour la mise en oeuvre du procédé selon une des revendications 1 à 9, comprenant un système d'éclairage pour éclairer la surface de la peau, un détecteur (20) pour détecter la lumière diffusée (7) émise au point de détection (9), un capteur de lignes papillaires (24) pour détecter les motifs linéaires caractéristiques de la peau (5), et une unité de traitement de données, fonctionnant comme comparateur, pour évaluer la variation de l'intensité de la lumière diffusée (7) en fonction de la longueur d'onde de la lumière incidente, en ce qui concerne sa coïncidence avec les propriétés de matière optiques de la peau naturelle, **caractérisé par le fait que** la surface de peau est éclairée avec de la lumière provenant de plusieurs domaines spectraux limités, de longueurs d'ondes différentes, au point d'impact (1) qui se situe à un endroit différent du point de détection.

11. Dispositif selon la revendication 10, **caractérisé par le fait que** la source lumineuse (10, 11) produit sur la peau (5) un motif d'éclairage (8) correspondant à un anneau de cercle approché ou complet.

12. Dispositif selon la revendication 10 ou 11, **caractérisé par le fait qu'**un anneau d'éclairage (15, 16) est associé à la source lumineuse (10, 11).

13. Dispositif selon la revendication 11 ou 12, **caractérisé par le fait que** le point de détection (9) est associé au centre de l'anneau de cercle.

14. Dispositif selon la revendication 12 ou 13, **caractérisé par le fait que** plusieurs sources lumineuses (10, 11), qui émettent de la lumière ayant des longueurs d'ondes différentes, sont disposées dans l'anneau d'éclairage (15, 16).

15. Dispositif selon la revendication 14, **caractérisé par le fait que** le nombre de sources lumineuses (10, 11) d'une longueur d'onde est adapté au pouvoir de diffusion et d'absorption de la peau (5) pour cette longueur d'onde.

16. Dispositif selon une des revendications 11 à 15, **caractérisé par le fait que** le diamètre du motif d'éclairage (8) est adapté à la longueur d'onde émise par la source lumineuse (10, 11) et au pouvoir de diffusion et d'absorption de la peau (5) en corrélation avec celle-ci.

17. Dispositif selon la revendication 16, **caractérisé par le fait qu'**il est prévu au moins deux anneaux d'éclairage (15, 16) mutuellement concentriques, qui émettent de la lumière avec des longueurs d'onde différentes.

18. Dispositif selon une des revendications 10 à 17, **caractérisé par le fait que** des diodes électroluminescentes sont prévues en tant que sources lumineuses (10, 11).

19. Dispositif selon une des revendications 10 à 18, **caractérisé par le fait que** des lasers sont prévus en tant que sources lumineuses (10, 11).

20. Dispositif selon une des revendications 12 à 19, **caractérisé par le fait que** l'anneau d'éclairage (15, 16) est formé d'un tronçon de tube à réflexion totale, réalisé à partir d'un matériau optique.

21. Dispositif selon une des revendications 10 à 20, **caractérisé par le fait qu'**une lentille (13) est prévue pour la reproduction de la source lumineuse (10, 11) sur la peau (5).

22. Dispositif selon la revendication 21, **caractérisé par le fait que** le détecteur (20) est associé à un trou central de la lentille (13).

23. Dispositif selon la revendication 21 ou 22, **caractérisé par le fait qu'**un miroir (21) est placé dans la trajectoire des rayons entre les sources lumineuses (10, 11) et la lentille (13) servant à reproduire le motif d'éclairage (8) sur la peau (5), miroir qui dévie la trajectoire des rayons de manière telle que la lentille (13) soit disposée à proximité de l'intérieur du tronçon tubulaire ou à l'intérieur de celui-ci.

24. Dispositif selon une des revendications 10 à 23, **caractérisé par le fait que** le motif d'éclairage (8) est généré au moyen d'un projecteur sur le point d'impact (1).

25. Dispositif selon une des revendications 11 à 23, **caractérisé par le fait que** le motif d'éclairage (8) est généré au moyen d'un générateur de motifs laser, en particulier d'un projecteur circulaire à diodes laser.

26. Dispositif selon une des revendications 10 à 25, **caractérisé par le fait qu'**un conducteur optique (19) est prévu pour acheminer la lumière diffusée (7) au détecteur (20).

27. Dispositif selon la revendication 26, **caractérisé par le fait que** le conducteur optique (19) est réalisé sous une forme flexible et mène au détecteur (20) disposé à un endroit quelconque.

28. Dispositif selon une des revendications 10 à 27, **caractérisé par le fait qu'**un spectromètre est disposé dans la trajectoire des rayons devant le détecteur (20).

29. Dispositif selon une des revendications 10 à 28, **caractérisé par le fait que** le détecteur (20) est constitué d'un réseau de photodiodes.

30. Dispositif selon une des revendications 10 à 29, **caractérisé par le fait que** le détecteur (20) est constitué d'un dispositif à couplage de charge.

31. Dispositif selon une des revendications 10 à 30, **caractérisé par le fait que** la caméra (22) est prévue pour enregistrer aussi bien le motif d'éclairage (8) que la lumière diffusée (7) émise par le point de détection (9).

32. Dispositif selon une des revendications 10 à 31, **caractérisé par le fait qu'**un filtre de polarisation (23) est disposé respectivement dans la trajectoire des rayons d'éclairage et dans la trajectoire des rayons de détection.

33. Dispositif selon la revendication 10, **caractérisé par le fait que** le détecteur (20) est constitué de la caméra (22) du capteur de lignes papillaires (24).

34. Dispositif selon la revendication 33, **caractérisé par le fait que** la caméra (22) est prévue pour enregistrer aussi bien le motif d'éclairage (8) que la lumière diffusée (7) émise par le point de détection (9).

35. Dispositif selon une des revendications 10 à 34, **caractérisé par le fait qu'**un filtre de polarisation (23) est disposé respectivement dans la trajectoire des rayons d'éclairage et dans la trajectoire des rayons de détection.

36. Dispositif selon une des revendications 21 à 35, **caractérisé par le fait qu'**un diaphragme (27) circulaire central est associé à la lentille (13), et **par le fait que** plusieurs sources lumineuses (10, 11) sont disposées à des distances différentes sur l'axe optique.
